# EUROPEAN PATENT SPECIFICATION

(11) **EP 0 516 319 B1**
(45) Date of publication and mention of the grant of the patent: **22.10.1997**
(21) Application number: 92304460.6
(22) Date of filing: 18.05.1992
(51) Int. Cl.: H04N 1/00

(54) **Video printer**
Videodrucker
Imprimante vidéo

(30) Priority: 27.05.1991 KR 918611
(43) Date of publication of application: 02.12.1992
(73) Proprietor: Samsung Electronics Co., Ltd., Suwon-city, Kyungki-do 441-370 (KR)
(72) Inventor: Kwak, Hee-Kuk, Jangann-ku, Suwon-shi, Kyonggi-do (KR)
(74) Representative: Read, Matthew Charles

(56) References cited:
- EP-A- 0 166 975
- DE-A- 3 822 619
- US-A- 5 045 951

## Description

The present invention relates to a video printer comprising means responsive to data representative of successive lines of a video raster scan to derive therefrom data representative of successive columns of data extending transversely across lines of the scan, and printing means for printing the columns of data successively.

It is known to provide a video printer that prints color image data in successive columns from a color video raster scan. However such conventional printers are slow in operation.

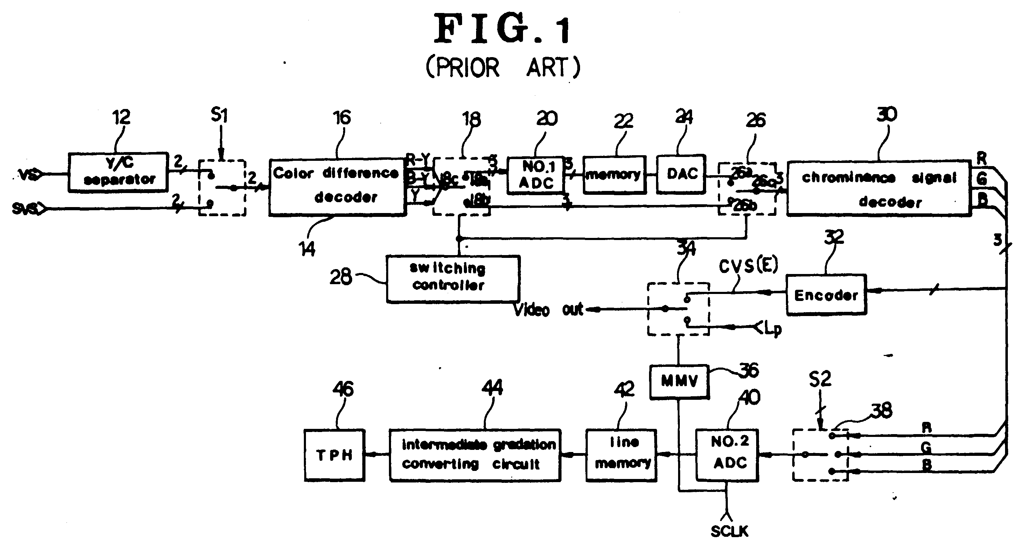

In order to explain this disadvantage, a prior art color video printer will now explained with reference to Figure 1.

The printer comprises: a color difference decoding means having Y/C separator 12 (Luminance and color separator), No. 1 switch 14 and a color difference decoder 16; a digital video data memory section including No. 2 switch 18, No. 1 ADC (analog-to-digital converter) 20, a frame memory 22, DAC (digital-to-analog converter) 24, switch No. 3 26 and a switching controller 28; a video monitor signal output section having a chrominance signal decoder 30 which receives color difference signals and produces coresponding chrominance signals, an encoder 32, switch No. 4 34 and a MMV (monostable multivibrator )36; and a printer section having switch No. 5 38, No. 2 ADC 40, a line memory 42, a intermediate gradation converting circuit 44 and a TPH (thermal print head) 46.

In use, externally inputted composite video signals (CVS) are divided into luminance signals and chrominance signals by the Y/C separator 12.

No. 1 switch 14 selects the luminance signals and chrominance signals separated by said Y/C separator 12 or an externally inputted super video signal (SVS) according to a selection signal S1 and provides an output to the color difference decoder 16.

The color difference decoder 16 decodes luminance signals and chrominanace signals selected by No. 1 switch 14 and outputs the color difference signals (R-Y, B-Y, Y).

At this time, Nos. 2, 3 switches 18, 26 are connected to the terminals (18c, 18b), (26b, 26c) according to the control of switching controller 28.

Accordingly, when the terminals 18c, 18a of Nos. 2, 3 switches 18, 26 are connected under the contorl of the switching controller 28, the color difference signals R-Y, B-Y, Y outputted from the color difference decoder 16 are converted to digital signals by No. 1 ADC 20 and are stored in frame memory 22 as a frame (2-fields) of video data.

The video data stored in said frame memory 22 is read by a control device and is inputted into DAC 24.

DAC 24 converts the video data read from the frame memory 22 to analog signal and it is outputted to chrominance signal decoder 30.

Chrominance signal decoder 30 decodes the analog color difference signals to chrominance signals, R (red), G (green), B (blue), and outputs the analog signals to encoder 32 and to No. 5 switch 38 respectively in the form of a video scan.

Here, the encoder 32 encodes the incoming R.G.B. chrominance signals and they are outputted as composite video signals (CVS) to be supplied to a monitor (not shown) for display purposes.

The encoder outputs, now changed to CVS, are inputted into one input of No. 4 switch 34 which receives pedestal level signals at its second input.

No. 4 switch 34 is switched by the outpus of the MMV 36 triggered by the predetermined period of clock (SCLK) and outputs the incoming composite video signals or pedestal level signals to the monitor (not shown).

Also, when the data of one frame is being outputted to a monitor, No. 5 switch 38 selects and outputs the B-color signal of the frame for printing, under the control of selection signals S2, to No. 2 ADC 40.

During the occurence of the frame, the clock (SCLK) is inputted into said No. 2 ADC 40 for the first column (initial position) in each horizontal line.

Accordingly, the B-chrominance signal data coresponding to a vertical line or column through the first picture point of each row in the frame, is converted into digital data and stored into line memory 42.

The data stored in said line memory 42 is converted to yellow by the intermediate gradation converting circuit 44 and is printed at TPH 46.

While the data of one vertical line stored in said line memory 42 is being printed, the data of the next following frame is outputted to the monitor through switch 34.

While the data of the next following frame is being ouptutted to the monitor, No. 2 ADC 40 samples the video signal of each horizontal line to assemble a second column of data under the control of the clock (SCLK).

The digital data sampled by No. 2 ADC 40 is printed by TPH 46 as a second column next to the first column, and further columns are thereafter printed in a similar manner, for each following frame.

After approximately 500-600 columns of one frame B-chrominance signal have been printed by this method, the G-chrominance signal of the R, G, B chrominance signals is selected by the selection signal S2 at No. 5 switch 38, which is then printed in vertical columns by a similar process thereby to print the color of magenta.

When the magenta color printing is completed, R-color signal is selected by the selection signal S2 at No. 5 switch 38, and cyan color is printed by a similar process.

In this way, the three colors of Y(yellow), M(magenta) and C(cyan) are printed sequentially.

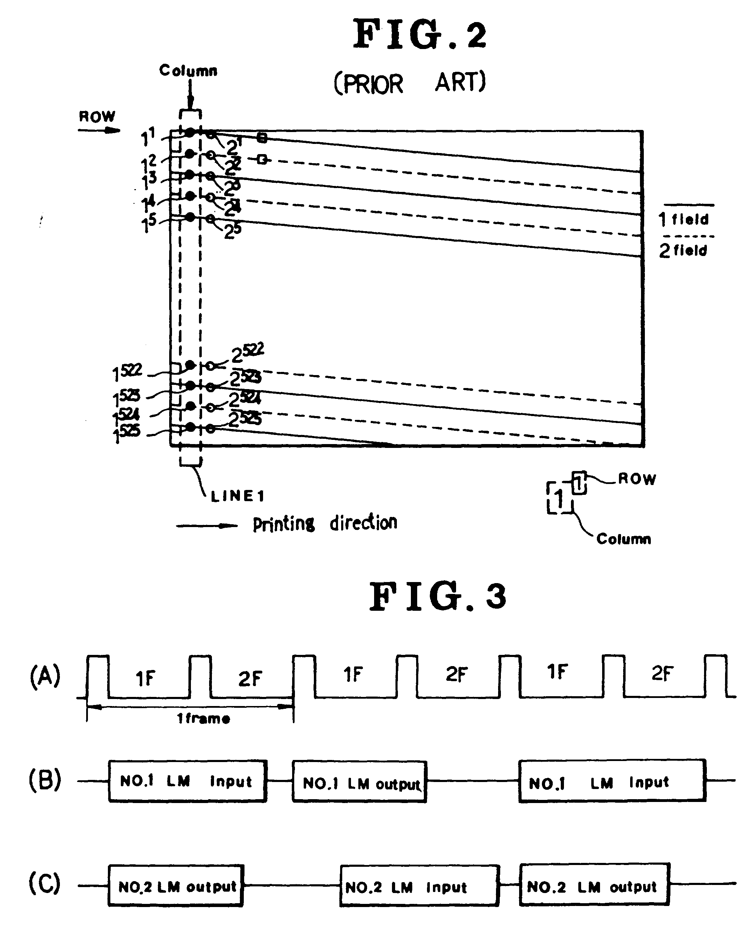

Figure 2 is an explanatory drawing depicting the sampling process for a frame of the video signal achieved by the sampling clock (SCLK) at No. 2 ADC 40 in Figure 1. One frame is composed of an odd field shown in continuous line and an even field depicted in dotted line. One frame comprises one screen.

The chrominance signal is inputted sequentially into No. 2 ADC 40 by selection of switches and when data of one screen (one frame) is outputted to a monitor, an initial sampling clock (SCLK) is inputted to select a first column made up the picture point of each horizontal line.

Accordingly the chrominance signal of a color selected by the switch 66 is converted into digital data by the clock (SCLK) with the first column being sampled.

Thereafter, when the data of the next frame is outputted to the monitor, the clock (SCLK) applied to No. 2 ADC 40 selects data for the second column.

By the same method as mentioned above, when approximately 500-600 vertical lines of the first chrominance signal have been sampled, the next chrominance signal is selected by switch selections and sampled by the same process explained above.

In this way, R, G, B chrominance signal data of one frame is sampled in columns and outputted into the line memory 42.

Figure 3 is a timing diagram of data input-output for line memory 42 of the conventional color video printer of Figure 1.

Two line memories are needed for printing of one frame video signal in the conventional color video printer.

In other words, when one frame of video signal comprising two fields as shown in Figure 3A is scanned, the first line memory inputs data as illustrated in Figure 3B. When data is inputted to the first line memory, the second line memory as shown in Figure 3C outputs the data inputted during a previous frame period.

Here, the data inputted into or outputted from the memory during one frame period is, as explained in the above, column data.

Likewise, when No. 2 line memory receives column data during one frame period, No. 1 line memory outputs column data already inputted during a previous frame period and two line memories perform the inputting and outputting alternately.

As described above, the conventional color video printer prints one line during one screen (one frame) display period. So the printing time T1 of one color can be listed as follows:$\text{T1=Tf x 500-600 lines = 500Tf-600Tf = 16.5-19.8 (sec)}$

Here Tf is a frame period encompassing 1/30 seconds (33m sec). Therefore the total printing time Tt in the case of printing 3 colors against R, G, B signal each becomes as below:$\text{Tt= 3T1 = 49.5 - 59.4 (sec)}$

As seen in the above explanation, the conventional color video printer has the drawback of taking aound 50-60 seconds to color-print one frame.

In addition to the afore-mentioned problem the described conventional color video printer has the shortcoming of needing two line memories.

Document EP-A-0 166 975 discloses a video printer wherein the image to be printed is stored on a magnetic disc. The stored image can be verified on a monitor. Then, the image data are rearranged and printed column by column.

With a view to overcoming these problems, the present invention is characterised by data conversion means including memory means for storing data representative of at least one field of the raster scan, and means for reading the columns of data from the memory means, the columns of data being output to the printing means during respective successive periods associated with the occurrence of successive field periods of the scan.

By use of the data conversion means, the columns of data for a field of the scan can be read out and printed much more rapidly than in the aforedescribed prior video printer.

Preferably, each column is read out during a respective blanking period associated with each field of the scan, thereby permitting the scan also to be fed to a video monitor, so that printing can be carried out simultaneously with display on the monitor.

Further features and advantages of the present invention can be understood by reference to the accompanying drawings, in which:
Figure 1 is a block diagram of a conventional video color printer,
Figure 2 is an explanatory drawing illustrating the sampling process of one frame video signal at No. 2 ADC means 26 in Figure 1,
Figure 3 is a timing diagram of the data input-output for the line memory in Figure 1,
Figure 4 is a block diagram showing one embodiment of a high speed color video printer in accordance with the present invention,
Figure 5 is a block diagram showing one embodiment of the data converting means 60 in Figure 4,
Figure 6 is a block diagram showing another embodiment of the data converting means 60 in figure 4,
Figure 7 is a lay-out drawing for the memory means in Figures 5 and 6, and
Figure 8 is a timing diagram explaining the operation of Figures 4, 5 and 6.

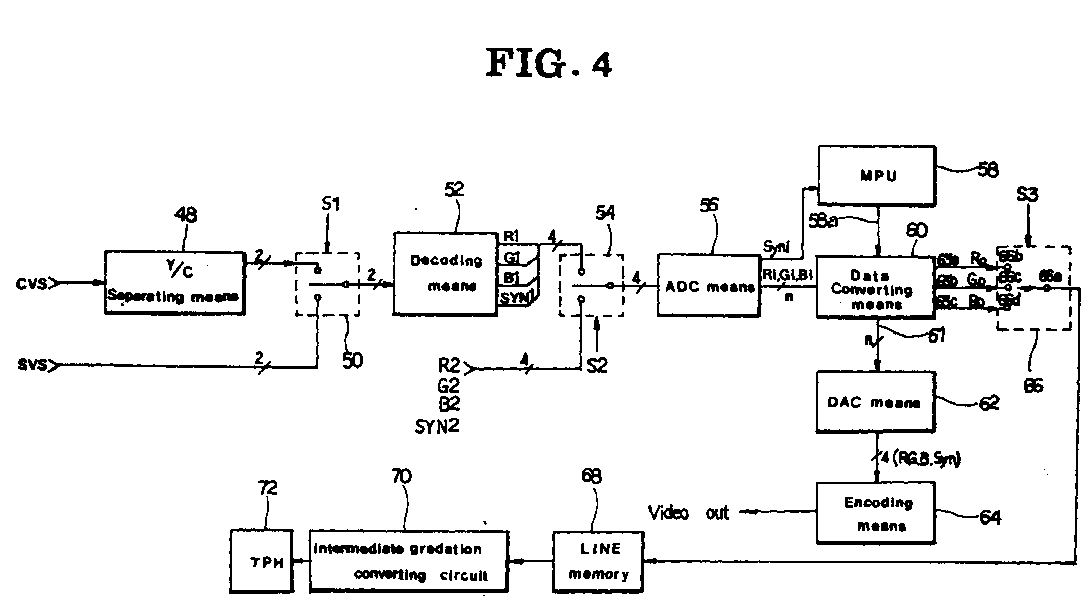

Figure 4 is a block diagram of a high speed video color printer in accordance with the present invention.

A Y/C separating means 48 inputs composite video signals CVS and outputs separated luminance and chrominance signals.

No. 1 selective means 50 outputs selectively the luminance signal and chominance signal outputted from said Y/C separating means 48 or the luminance signal and chrominance signal of a super video signal SVS according to the input of the selective signal S1.

A decoding means 52 separates chrominance signals R1, G1, B1 and the synchronising signal SYN 1 by decoding the luminance signal and chrominance signal outputted from said No. 1 selective means 50.

No. 2 selective means 54 outputs selectively the chrominance signal and synchronising signal of said decoding means 52, or externally inputted chrominance signals R2, G2, B2 and synchronising signal SYN2, according to a predetermined control signal S2.

An ADC means 56 converts the signal outputted from said No. 2 selective means 54 into a digital signal.

A MPU microprocessor 58 produces control signals S1, S2, S3 according to the user's input selection and outputs the control signals onto the line 58a.

A data converting means 60 which includes an internal memory means, stores chrominance signal data Ri, Gi, Bi converted into digital signals at said ADC means 56 according to the control provided by the MPU 58 on the internal memory means, outputs the video data in columns to print output ports 63a, 63b, 63c during the line blanking interval of a field period, and outputs the video signals by field to a display output port 61.

A DAC means 62 converts video data outputted field by field through display output port 61 of the data converting means 60, into analog signals.

An encoding means 64 encodes the output of said DAC means 62 into composite video signals that are fed to a video monitor (not shown).

No. 3 selective means 66 outputs selectively signals representative of one color from print output ports 63a, 63b, 63c of the data converting means 60, under the control of signal S3 from the MPU.

A line column memory means 68 stores one color video data selected and outputted by said No. 3 selective means 66, and then performs the printing by outputting video data during a residual period minus a period which stores video data in one field period.

An intermediate gradation converting means 70 converts as an intermediate gradation, the data outputted from the above line memory means 66.

TPH 72 is a printing means which prints the output of the above intermediate gradation converting means 70.

Therefore when composite video signal CVS in Figure 4 is inputted, Y/C separating means 48 divides said composite video signal CVS into luminance and chrominance signals.

No. 1 selective means 56 selectively ouptuts the luminance and chrominance signals of the composite video signals CVS separated by Y/C separating means 48, or the luminance signals and chrominance signals of the composite video signal CVS, according to the selective signal S1.

Decoding means 52 outputs the luminance signals and chrominance signals outputted from said selective means 50.

No. 2 selective means 54 selectively outputs chrominance signals R1, G1, B1 and synchronising signals SYN1 outputted from said decoding means 52, or externally inputted chrominance signals R2, G2, B2 and the synchronising signals SYN2, according to control signal S2.

ADC means 56 outputs Ri, Gi, Bi, SYNi by converting chrominance signals and synchronising signals outputed from said No. 2 selective means 54, into digital signals.

The digitalised data Ri, Gi, Bi (digitalised data of R, G, B signals) from the ADC means 56 are inputted into data converting means 60.

If the user selects a print mode, MPU 58 is synchronised to the vertical synchronising signal SYNi of the incoming video signal and outputs a recording mode signal on the line 58a for one frame period.

The data converting means 60 produces recording addresses by way of recording mode signals, and the data inputted according to the recording addresses are recorded into the internal memory means for Red, Green and Blue respectively.

When Red, Green and Blue data Ri, Gi, Bi of one frame are stored into the internal memory means of data converting means 60, MPU 58 outputs print mode signals on line 58a during the usual vertical blanking signals.

Also, MPU 58 activates the internal memory of data converting means 60 in order to read out data to be printed (as will be explained in more detail hereinafter), and inputs a write signal to line memory means 68.

Now, the data converting means 60 in response to the print mode signals, generates printing addresses and applies to its internal memory means to address data to be printed column by column. Thus, the data converting means 60 generates printing addresses for data comprising the first column (from the first line to the last line by the first row) in the internal memory means during the vertical synchronising 3H and equalising pulse 3H period of the blanking interval for the first field period.

Then, the data converting means 60 produces the printing addresses for the data making up the second column, during the vertical synchronising 3H and equalising pulse 3H period of the blanking interval for the second field period.

Thereafter, the data converting means 60 generates the printing addresses for the third, fourth.....the 512th column, so that the data can be addressed in the internal memory means.

Therefore, 512 pieces of picture element data of the first vertical line (or column) stored respectively in red, green and blue in the internal memory means of data converting means 60, are read during a 6H period (about 381 µ sec), and are outputted to print output ports 63a, 63b, 63c.

Here, the access time per a picture element is as follows:$\text{6H/512 row = about 740 n sec.}$

One vertical line data of red, green and blue Ro, Go, Bo outputted from each internal memory means of said data converting means 60 is fed to the respective terminals 66b, 66c, 66d of No. 3 selective means 66.

At the said No. 3 selective means 66 terminal 66a is connected initially to the terminal 66d by the control signal S3, resulting in only the blue data Bo outputted from the internal memory means of data converting means 60 being inputted into line memory means 68.

The data recorded in the said line memory means 68, after the elapse of 6H section, is read during one field period (16.7 m sec) minus 6H period (about 381 µ sec) i.e., 16.7 m sec - 381 µ sec = 16.319 m sec and is inputted into the intermediate gradation converting means 70.

The said intermdiate gradation converting means 70 converts the print data by way of intermediate gradation and outputs the data to TPH 72 which performs the printing.

Accordingly, one vertical line (or column) of data of one frame is printed during 16.319 m sec.

Thereafter MPU58 outputs a control signal on line 58a after a period of 6H (which is the vertical synchronising and equalising pulse period) and causes data converting means 60 to operate in a monitoring mode in order to feed video data to the monitor for display.

When operated in a monitoring mode by the control signal on line 58a, the data converting means 60 produces monitoring addresses and inputs to its internal memory means.

The monitoring addresses generated in data converting means 60, produce addresses for conventional interlaced raster scans, reading the data of odd and even fields from the internal memory means. Thus odd rows are firstly read from the internal memory means, and then even rows are read from the memory.

Thus, in response to the monitoring addresses, the data converting means 60 firstly outputs to the display output port 61, an odd field of data during the field period that remains after the video data has been output to the print output ports 63a, 63b, 63c in one field period, and then, outputs the data for the even field.

Red, green and blue data outputted to the display output port 61 of said data converting means 60 are converted to analog signals by DAC means 62.

Red, green and blue data converted to analog signals are encoded into composite video signals by encoding means 64, and then are outputted to the monitor, which causes one frame of video signal now being printed also to be displayed.

As described above, after the frame of video signal has been displayed on the monitor, and when the vertical synchronising signal is inputted, MPU 58, as mentioned above, so outputs the control signal to the line 58a, that the data converting means 60 is again operated in print mode.

Then the data converting means 60 designates the second column of the internal memory means and generates appropriate addresses.

Namely, data converting means 60 produces addresses reading from the first row up to 512th row of the second column during the 6H (381 µ sec) period of the blanking signal interval in the two-field period.

Therefore, out of the respective internal memory means of data converting means 60, vertical line data for the second column is read and outputted.

The data (the second column of data) is read as mentioned above during a 6H period.

Then, No. 3 selective means 66 with the terminals 66a and 66d being connected transmits the second vertical line of data to the line memory means 68 and the second vertical line of data is stored in line memory means 68.

The stored data of the line memory means 68 is, as mentioned above, transmitted to TPH 72 through the intermediate gradation converting means 70 and is printed in about 16 m sec.

Accordingly, the vertical line data is read during the 6H period of every field (262.5H) from the internal memory means of the data converting means 60 which stored the Blue color data, and is outputted to print output ports 63a, and printed during 262.5H-6H period (16.3 m sec).

In other words, all the vertical line (513 lines) data of Blue color (B) stored in the memory means in the data converting means 60 are transmitted to the line memory means 68 through No. 3 selective means 66 for 8.3 second which is "16.3 m sec x 512 lines" period, and then are printed.

When all the vertical line data of Blue color stored in the internal memory means of the data converting means 60 has been transmitted to the line memory and printed, the terminal 66a in No. 3 selective means 66 is connected to the terminal 66c by the MPU 56.

When said No. 3 selective means 66 is switched, MPU 58, by repeating the same operation as the one mentioned above, outputs vertical line data per every field from the internal memory means of data converting means 60 wherein Green color data is stored, and then prints Green color data by transmitting it to line memory means 68 for 8.3 seconds.

When the transmission of the Green color data is completed, the terminal 66a of No. 3 selective means 66 is connected to the terminal 66b by MPU 58, and by repeating the same operation as mentioned above, Red color data recorded in the internal memory means of data converting means 60 is transmitted to the line memory means 68 column by column.

Therefore, let's assume that the total printing time for Red R, Green G and Blue B color data stored in each internal memory means of data converting means 60 is To. Then the following formula for To reads as follows:$\text{To = 16.7 m sec x 512 x 3 colors (R.G.B.) = 25.6 sec}$ 16.7 m sec in the above formula is one field period which is needed for scanning 262.5H. 6H period in the above 16.7 m sec is the data read time for the vertical line data and approximately 16.319 m sec period which is 16.7 m sec-6H period represents the period wherein the vertical line data is printed.

As described above, the present invention can print color videos at a high speed, wherein one frame of video data is stored into internal memory means of data converting means, the frame data stored in the internal memory means of the data converting means is transmitted to line memory means as one column per field period, and then prints, and one screen of video signal is outputted to a monitor during the printing operation.

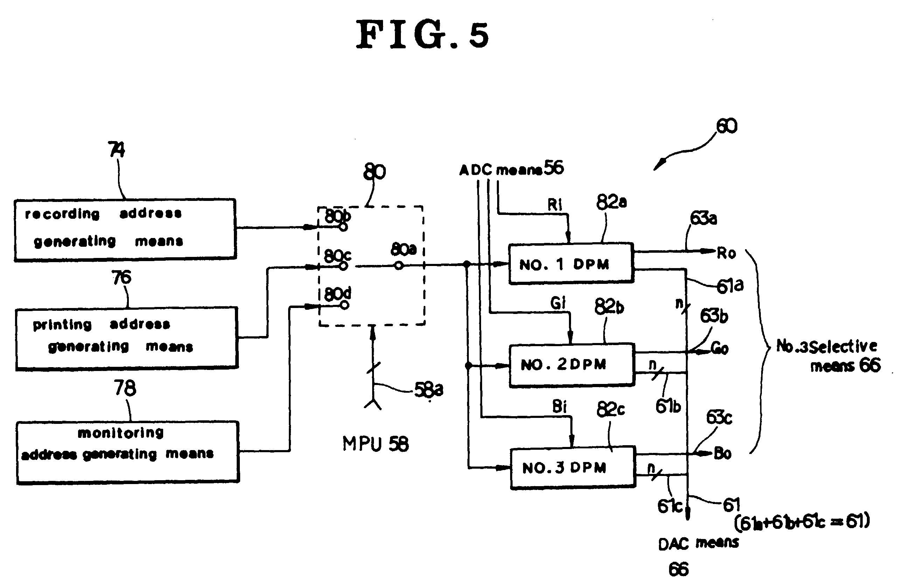

Figure 5 is a block diagram showing an embodiment of the data converting means 60 of Figure 4.

In Figure 5, the recording address generating means 74 produces sequentially the addresses for recording one frame of video data on the memory means.

The printing address generating means 76 designates one column out of the memory means wherein the video data is stored, by way of a method which designates sequentially the designated columns and sequential addresses data locations within a designated column.

The monitoring address generating means 78 generates sequential addresses to read a field of data from the internal memory, to be outputted sequentially through the display output port 61.

The address selective means 80 is controlled by MPU 58 to select the addresses generated by the recording address generating means 74, the printing address generating means 76 or monitoring address generating means 78.

No. 1, 2, 3 dual port memory means DPM, 82a, 82b, 82c receive the addresses outputted from the address generating means 74, 76 or 78, selected by said address selective means 80, and store the digital color signals R1, G1, B1 inputted from the ADC 56, or ouptut the stored color signal data.

No. 1, 2, 3 DPM means 82a, 82b, 82c respectively have print output ports 63a, 63b, 63c and a display output port 61.

The display output ports 61 of said No. 1, 2, 3 DPM means 82a, 82b, 82c are connected to DAC means 62 to be outputted to the monitor after being converted from digital video signals to analog video signals, and the print output ports 63a, 63b, 63c are respectively connected to the switching terminals of No. 3 selective means 66.

Accordingly, digital Ri, Gi, Bi data from ADC means 56 are respectively inputted to the input terminals of No. 1, 2, 3 DPM means 82a, 82b, 82c. When the recording mode is selected, MPU 58 is synchronised to the vertical synchronising signal of the input video signal and outputs recording mode signals to the line 58a during one frame period.

When the recording mode signal outputted from MPU 58 is supplied to the address selective means 80 through line 58a, the address selective means 80 is switched and a terminal 80a is connected to a terminal 80b.

When the termianls 80a and 80b of the address selective means 80 are connected, the recording address generating means 74 is connected to No. 1, 2, 3 DPM means 82a, 82b, 82c and the recording address generated from the recording address generating means 74 is supplied to No. 1, 2, 3 DPM means 82a, 82b, 82c.

No. 1, 2, 3 DPM means 82a, 82b 82c record Ri, Gi, Bi data inputted according to the recording addresses generated from the recording address generating means 74 into the internal memory cells.

The addresses generated from the above recording address generating means 74 are so generated as to align the pixel positon of the monitor with the same placement position to be stored in No. 1, 2, 3 DPM means 82a, 82b, 82c.

As described above, when the user selects the print mode under the condition that one frame each of Red, Green, Blue color data Ri, Gi, Bi is stored in No. 1, 2, 3 DPM means 82a, 82b, 82c respectively, MPU 58 outputs print mode signals to line 58a during the 6H period which is the vertical synchronising and equalising pulse period.

Then, the print output ports 63a, 63b, 63c of No. 1, 2, 3 DPM means 82a, 82b, 82c connected to No. 3 selective means 66 are enabled.

Then, the data stored in No. 1, 2, 3 DPM means 82a, 82b, 82c are outputted to No. 3 selective means 66 through respective print output ports 63a, 63b, 63c.

The printing addresses generated from said printing address generating means 76 are so generated to designate one column during the first vertical 3H and equalising pulse 3H interval (from the first row to the last row in the first column), so the data outputted to No. 3 selective means 66 through print output ports 63a, 63b, 63c at No. 1, 2, 3 DPM 82a, 82b, 82c is outputted sequentially to define the first column of data.

No. 3 selective means 66 initially outputs only Blue color data to line memory during the 6H period. The line memory outputs the first column data of blue color data during a period not including the aforesaid period in one field period, and is caused to perform printing.

Thereafter, MPU 58 supplies monitoring mode signals to the address selective means 80 through line 58a when 6H period which is the vertical synchronising and equalising pulse period, is over.

When monitoring mode signal is inputted, the address selective means 80 is switched so that the terminals 80a and 80d are connected and the monitoring addresses generated from monitoring address generating means 78 are inputted to No. 1, 2, 3 DPM means 82a, 82b, 82c.

At this moment, addresses generated from monitoring address generating means 78 are normal addresses which read odd and even fields of data from No. 1, 2, 3 DPM means 82a, 82b, 82c. First of all, odd fields of data among the data recorded in No. 1, 2, 3 DPM 82a, 82b, 82c are outputted to DAC means 62 through display output port 61, and then even fields of data are outputted.

Red, Green, Blue color data outputted to display output port 61 of No. 1, 2, 3 DPM means 82a, 82b, 82c of said data converting means 60 are converted to analog signals by DAC means 62.

Red, Green, Blue color data converted to analog signals are encoded to composite video signals and outputted to a monitor. Thus one frame of the video signal now being printed is simultaneously displayed.

As mentioned above, after the video image is displayed on a monitor, and then, after a vertical synchronising signal is inputted, MPU 58 inputs printing mode signals to address selective means 80 through line 58a.

Terminals 80a and 80c in address selective means 80, as described above are connected in response said printing mode signals.

Then the printing address generating means 78 sequentially generates address signals for the second column, starting in the first row and moving sequentially up to the 512th row.

In other words, by reading addresses from the first row to the 512th row for the second column during the 6H interval, 381 µ sec, data for the second column is generated.

Accordingly, data of No. 2 column is read from No. 1, 2, 3 DPM means 82a, 82b, 82c respectively, and then is outputted to print output port 63a, 63b, 63c respectively.

No. 2 column of data read as above (the second column of data) is, as mentioned, read during a 6H interval.

At this moment, No. 3 selective means 66 outputs Blue color data only to line memory for 6H interval and the line memory outputs the second column data of Blue color data during a period which excludes the 6H interval in one field period to perform the printing.

Accordingly, each vertical line data in No. 3 DPM means 82c is read/outputted per 6H interval of each field 262.5H and is printed during 262.5H-6H interval, 16.3 m sec.

When the printing of Blue color data stored in said No. 3 DPM means 82c is completed, terminals 66a and 66c in No. 3 selective means are connected under the control of MPU 58.

When terminals 66a and 66c are connected, MPU 58 repeats the same operations as mentioned above and transmits column data in No. 2 DPM means 82b to line memory 68 per every field, and causes the printing of Green color data.

When the transmission of data of No. 2 DPM means 82b is completed, MPU 58 connects terminals 66a and 66b in No. 3 selective means 66, repeats the same operation, and transmits Red color data stored in No. 1 DPM means 82a, to line memory 68 to produce printing of Red color data.

Let us assume that total print time for R, G, B color data stored respectively in No. 1, 2, 3 DPM means 82a, 82b, 82c is To, which can be stated as:$\text{To = 16.7 m sec x 512 x 3 colors (R, G, B) = 25.6 sec.}$

In the foregoing formula, 16.7 m sec is the field frequency cycle of a scanning period of 262.5H and a read time for vertical line data during a 6H interval within said 16.7 m sec cycle, while approximately 16.319 m sec period which is 16.7 m sec - 6H period is the time when vertical line data is printed.

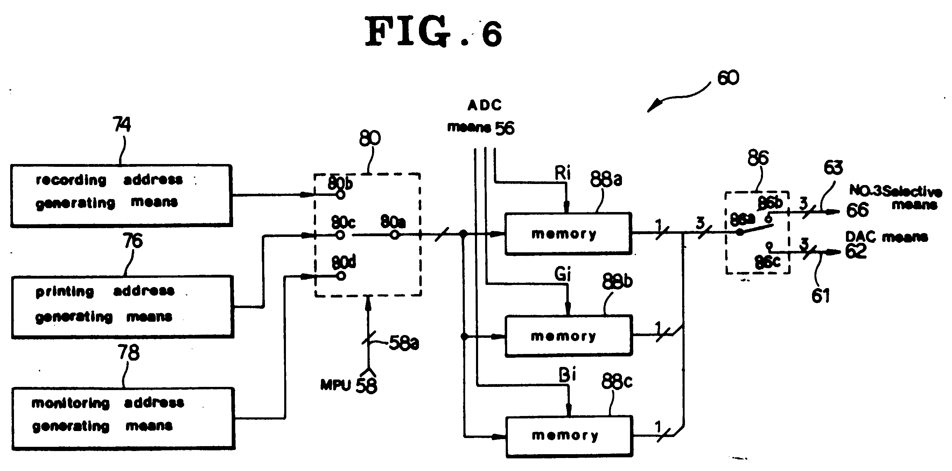

Figure 6 is a block diagram depicting another embodiment of data converting means 60 in Figure 4.

The data converting means 60 shown in Figure 6 is composed of a print output port as explained in Figure 5 and memory means 88a, 88b, 88c having one output port, eliminating No. 1, 2, 3 DPM means 82a, 82b, 82c and their associated display output ports. However, No. 4 selective means 86 having a print output port 63 and a display output port 61 are prvovided in Figure 6. No.4 selective means 86 is connected to the output ports of memory means 88a, 88b, 88c.

Therefore, data of memory means 88a, 88b, 88c outputted to one output port is selected by No. 4 selective means 86 and is outputted either to No. 3 selective means 66 or to DAC means.

The operation of recording, printing and monitoring address generating means 74, 76, 78 and that of address selective means 80 which selectively outputs addresses generated from address generating means 74, 76, 78 being controlled by MPU 58 are the same operations as explained in said Figure 5. The only difference is that terminals 86a and 86b in No. 4 selective means 86 are connected during 6H interval which is the vertical synchronising and equalising pulse period of a blanking signal, and terminals 88a and 88c are connected in other periods.

Accordingly, memory means 88a, 88b, 88c are connected to No. 3 selective means 66 during 6H interval in one field and the data stored in memory means 88a, 88b, 88c are outputted to No. 3 selective means 66.

No. 3 selective means 66 reads one color of chrominance signal data out of the data generated during the 6H interval in one field, and outputs the single color data to line memory 68 and causes printing to be performed after the 6H period.

Terminals 86a and 86c in No. 4 selective means 86 are connected under the control of MPU 58 at the end of the 6H interval, and video signals are caused to be outputted to screen by transmitting odd and even fields of data in sequentially-read memory means 88a, 88b, 88c to DAC means 62.

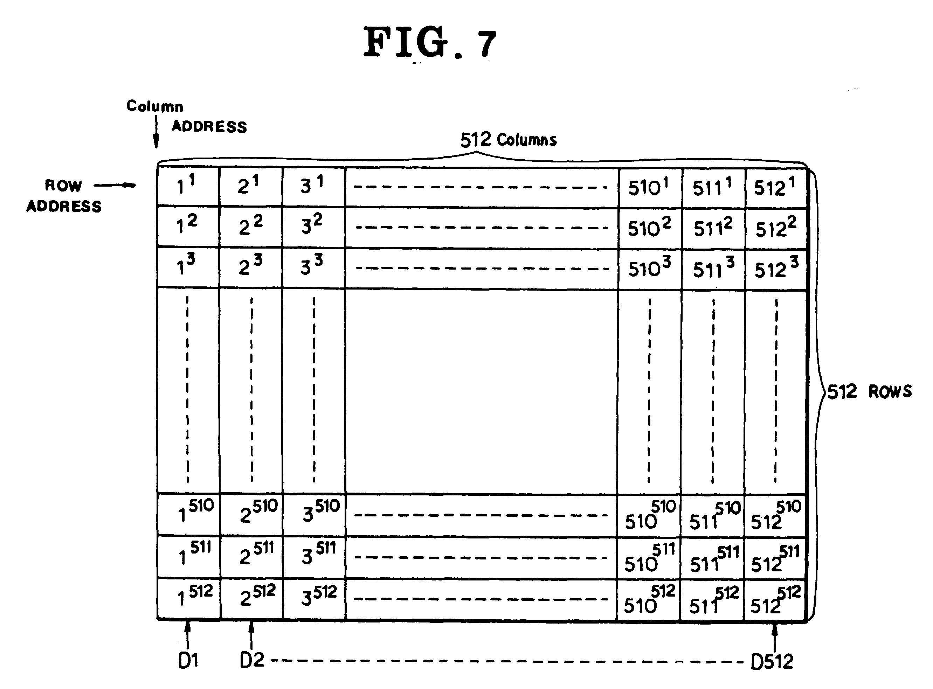

Figure 7 is a memory layout for memory means 88a, 88b, 88c in Figure 6 or of No. 1, 2, 3 DPM means 82a, 82b, 82c in Figure 5, which has a data storage cell configuration in a corresponding 1:1 relationship to a pixel screen display (not shown).

Here, the first row represents the first horizontal line and the first column is the data of the first pixel of each line.

Accordingly, the data inputted from ADC means 56 by means of the recording addresses generated normally from recording address generating means 74 in Figure 5 or Figure 6 is, as depicted in Figure 7, recorded in the internal memory cell with the same position as the pixel position of the screen.

For instance, the data of 1', 2', 3',4',....., 512' in a screen is stored on the first row domain of memory means and on the second row domain, data of 1², 2², 3², 4²,.... 512² is stored.

In the foregoing explanation, the number represents the position of rows while the number on the right side top of a number shows the column position.

Therefore, when changed to recording mode, Ri, Gi, Bi color data is stored in memory means in a corresponding address arrangement to screen pixel position.

When print mode is selected for a frame of Red, Green or Blue color, data Ri, Gi, Bi is stored on respective memory means, vertical one-line data D1 is read in 1¹, 2², 3³, ...... 1⁵¹² order by the printing address generated during the 6H interval which is the vertical synchronising and equalising pulse period.

At this moment, as 512 pieces of pixel data D1 of No. 1 vertical line memory means are read during the 6H interval, approximately 381µ sec. Therefore, the access time per pixel is around 740 n sec. (6H/512 rows = 740 n sec, where 6H is around 381 µ sec.).

Afterwards, vertical No. 2 line data D2 is read in 2¹, 2², 2³,......., 2⁵¹² order during a 6H interval which is the next vertical syncrhonising and equalising pulse period.

In this way, the data of vertical 3, 4, ......, 512 line is read.

In the meantime, the data recorded in memory means is read by the monitoring addresses generating from monitoring address generating means 78 wherein odd field data out of respective memory means is first read and then, even field data is read.

In other words, after the first row data of 1¹, 2¹, 3¹, ...., 512¹, the third row data of 1³, 2³, 3³, ...., 512 and other odd field data of 5th, 7th, 9th .... 512th row recorded in respective memory means are outputted, then the second row data of 1², 2², 3², ..., 512², the fourth row data of 1⁴, 2⁴, 3⁴, ...., 512⁴ and other even field data of 6th, 8th, 10th, ...., 512th row are outputted to parallel ports.

As noted above, when the odd and even field data out of respective memory means wherein Red, Green, Blue data are stored, are sequentially outputted, one frame of video signal currently being printed is also displayed.

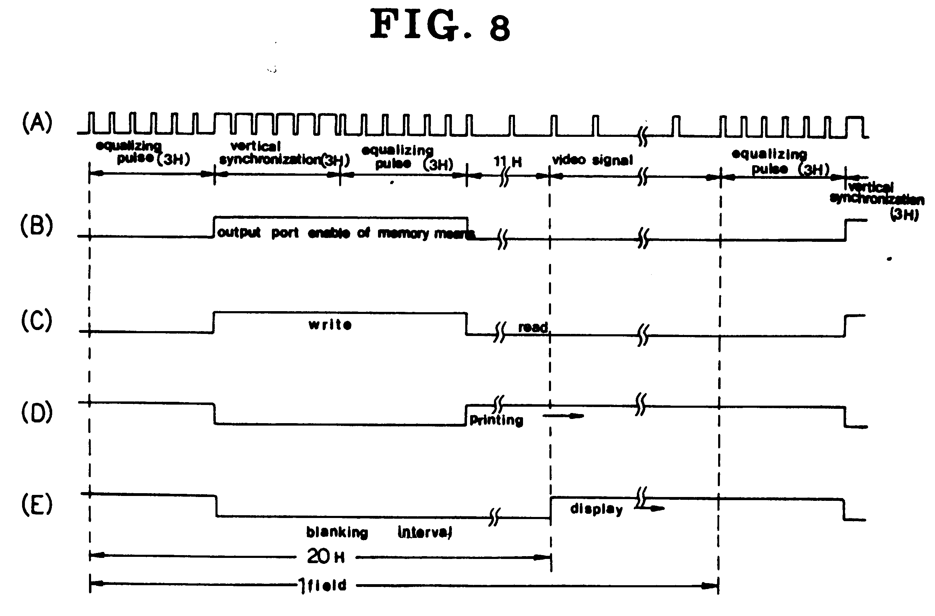

Figure 8 shows a timing diagram explaining the operation of Figures 4, 5, 6.

Figure 8A is a timing diagram of composite video signal, namely a timing diagram of composite video signal for one field.

One field of composite video signal covers 262.5H and consists of blanking signal 20H and video signals 262.5H-20H.

A blanking signal of 20H consists of equalising pulse of 5H or 6H (in order to distinguish odd fields from even fields, distinction of 5H and 6H is given) and 3H of vertical synchronising pulse.

Figure 8B is a timing diagram of a data output enable pulse for memory means (82a, 82b, 82c or 88a, 88b, 88c) wherein the output port of memory means (82a, 82b, 82c or 88a, 88b, 88c) connected to No. 3 selective means 66 is enabled during 6H of vertical synchronising and equalising pulse period.

One color of one vertical line (one column) data out of B, G, R is outputted through No. 3 selective means 66 during the 6H period (63.5 x 6 = 381 µ sec) during which the output port of memory means (82a, 82b, 82c or 88a, 88b, 88c) has been enabled. Since 512 pieces of pixel data D1 for No. 1 vertical line memory means (82a, 82b, 82c or 88a, 88b, 88c) are read during the 6H period, approximately 381 µ sec, an access time per a pixel is around 740 n sec.

6H/512 rows = 740 n sec, where 6H equals around 381µ sec.

Figure 8C is a timing diagram for write/read enable pulse in line memory means 68.

Line memory means 68, as described in Figure 8B, stored chrominance signal data of a column of data (one color of one vertical line) which is inputted through No. 3 selective means 66 during a 6H period, the color depending upon which output port of memory means (82a, 82b, 82c or 88a, 88b, 88c) is enabled.

After elapse of the 6H period, line memory means 68 reads the chrominance dignal data for the stored column during a 262.5H-6H = 256H (16.7 m sec - 381 m sec 16.319 µ sec) period.

Figure 8D is a timing diagram of the printing period, more precisely a timing diagram for the printing period of one color of one vertical line or column of the R, G, or B colors. As noted in Figure 8C, a column of chrominance signal data read from line memory means 68 is read during a period of 262.5H - 6H 256.5H (16.7 m sec - 381 µ sec = 16.319 m sec) and is printed by TPH 7s through the intermediate gradation converting means 70.

In this way, one column of frame data is printed during 16.319 m sec.

Figure 8E is a timing diagram showing a monitoring enable period, more precisely, a timing digram showing a period for displaying one frame (one screen).

As noted in Figures 8C, 8D, one frame of video signal is displayed whilst being printed, i.e. during a period when column data in the line memory means 68 is read and printed.

In other words, the data for the Red, Green and Blue colors is outputted in parallel to DAC means 62 and converted to an analog signal, said parallel data is encoded by encoding means 64 into a composite video signal and outputted to the monitor, so that one frame of video signal currently being printed is also displayed.

As explained in Figure 8, as one color of column data is printed during one field period, 16.7 m sec, and if three colors having 512 columns respectively are to be printed, the total time to be spent for printing To becomes as follows:$\text{To = 16.7 m sec x 512 x 3 colors (R, G, B) = 25.6 sec}$

As explained in the foregoing, the described embodiment of video printer according to the present invention can print color videos at a high speed by reading video data stored in memory means during a 6H interval in one field corresponding to a vertical synchronising and equalising pulse period, by storing said video data in line memory means, by outputting and printing said video data stored in line memory means during the remainder of the field period (which excludes the 6H of vertical synchronising and equalising pulse period) with a shortened printing time.

## Claims

1. A video printer comprising a printing means (66,68,70,72), a memory means (82a,82b,82c) for storing image data corresponding to one frame of an input video signal and a printing address generating means (76) for accessing the memory means so as to read out image data column-by-column to the printing means for printing, **characterized by** a monitoring address generating means (78) for accessing the memory means so as to read out image data line-by-line for display by a monitor, the printing address generating means being configured to read out a column of image data during a period corresponding to the vertical blanking period of a signal according to a composite video signal standard and the monitoring address generating means being configured to read out said image data during a period corresponding to the picture portion of a signal according to said composite video signal standard.

2. A printer according to claim 1, wherein the memory means comprises first, second and third memories for storing respective colour components of said image data.

3. A printer according to claim 2, wherein the printing means is operative to print out said colour components separately.

4. A printer according to claim 2 or 3, including signal processing means (48,52) for converting an input video signal, according to said composite video signal standard into an RGB signal, wherein the memory means is arranged to store said RGB signal.

5. A printer according to any preceding claim, including recording address generating means (74) for addressing the memory means for the writing of said image data thereto.

6. A printer according to any preceding claim, wherein the printing means includes a thermal printing head (72).

7. A printer according to any preceding claim, wherein the printing means includes an intermediate gradation converting cicuit (70).

8. A printer according to any preceding claim, wherein the printing means includes a print buffer memory (68) for storing a column of image data, read from the memory means, prior to printing.

9. A printer according to claim 8, wherein image data, stored in the print buffer memory, is read out for controlling printing during said period corresponding to the picture portion of a signal according to said composite video signal standard.

10. A printer according to any preceding claim, including an analogue-to-digital converter (56) for digitizing an input video signal, wherein the memory means stores digitized video signals output by the analogue-to-digital converter.

## Patentansprüche

1. Videodrucker mit einer Druckeinrichtung (66, 68, 70, 72), einer Speichereinrichtung (82a, 82b, 82c) zum Speichern von Bilddaten, die einem Vollbild eines eingegebenen Videosignals entsprechen, und einer Druckadressen-Generatoreinrichtung (76) zum Zugreifen auf die Speichereinrichtung, um zum Drucken Bilddaten spaltenweise an die Druckeinrichtung auszulesen, **gekennzeichnet durch** eine Monitoradressen-Generatoreinrichtung (78) zum Zugreifen auf die Speichereinrichtung, um Bilddaten zeilenweise zur Anzeige durch einen Monitor auszulesen, wobei die Druckadressen-Generatoreinrichtung aufgebaut ist, eine Spalte Bilddaten während eines Zeitintervalles auszulesen, das dem vertikalen Austastzeitintervall eines Signals in Übereinstimmung mit einem Standard-Videosignalgemisch entspricht, und die Monitoradressen-Generatoreinrichtung aufgebaut ist, die Bilddaten während eines Zeitintervalles auszulesen, das dem Bildteil eines Signals in Übereinstimmung mit dem Standard-Videosignalgemisch entspricht.

2. Drucker gemäß Anspruch 1, bei dem die Speichereinrichtung einen ersten, einen zweiten und einen dritten Speicher aufweist, zum Speichern von jeweiligen Farbkomponenten der Bilddaten.

3. Drucker gemäß Anspruch 2, wobei die Druckeinrichtung betriebsfähig ist, die Farbkomponenten getrennt auszudrucken.

4. Drucker gemäß Anspruch 2 oder 3, der eine Signalverarbeitungseinrichtung (48, 52) zur Umwandlung eines eingegebenen Videosignals in Übereinstimmung mit dem Standard-Videosignalgemisch in ein RGB-Signal enthält, wobei die Speichereinrichtung dafür eingerichtet ist, das RGB-Signal zu speichern.

5. Drucker gemäß einem der vorhergehenden Ansprüche, der eine Aufzeichnungsadressen-Generatoreinrichtung (74) zum Adressieren der Speichereinrichtung für das Schreiben der Bilddaten dahinein enthält.

6. Drucker gemäß einem der vorhergehenden Ansprüche, wobei die Druckeinrichtung einen Thermodruckkopf (72) enthält.

7. Drucker gemäß einem der vorhergehenden Ansprüche, wobei die Druckeinrichtung eine Zwischengradations-Wandlerschaltung (70) enthält.

8. Drucker gemäß einem der vorhergehenden Ansprüche, wobei die Druckeinrichtung einen Druckpufferspeicher (68) enthält, zum Speichern einer Spalte von aus der Speichereinrichtung ausgelesenen Bilddaten vor dem Drucken.

9. Drucker gemäß Anspruch 8, wobei im Druckpufferspeicher gespeicherte Bilddaten zur Steuerung des Druckens während des Zeitintervalles ausgelesen werden, das dem Bildteil eines Signals in Übereinstimmung mit dem Standard-Videosignalgemisch entspricht.

10. Drucker gemäß einem der vorhergehenden Ansprüche, der einen Analog-Digital-Wandler (56) zum Digitalisieren eines eingegebenen Videosignals enthält, wobei die Speichereinrichtung von dem Analog-Digital-Wandler ausgegebene Videosignale speichert.

## Revendications

1. Imprimante vidéo comprenant : un moyen (66, 68, 70, 72) d'impression ; un moyen (82a, 82b, 82c) de mémorisation destiné à mémoriser une donnée d'image correspondant à une image d'un signal vidéo d'entrée ; et un moyen (76) générateur d'adresses d'impression destiné à accéder au moyen de mémorisation pour sortir, colonne par colonne, une donnée d'image vers le moyen d'impression pour impression, caractérisée par un moyen (78) générateur d'adresses de surveillance destiné à accéder au moyen de mémorisation pour sortir, ligne par ligne, une donnée d'image, pour affichage sur un écran vidéo, le moyen générateur d'adresses d'impression étant configuré pour lire une colonne de donnée d'image pendant une période correspondant à la période de suppression de trame d'un signal selon une norme de signal vidéo composite, et le moyen générateur d'adresses de surveillance étant configuré pour lire ladite donnée d'image pendant une période correspondant à la partie image d'un signal selon ladite norme de signal vidéo composite.

2. Imprimante selon la revendication 1, dans laquelle le moyen de mémorisation comprend des première, deuxième et troisième mémoires destinées à mémoriser des composantes de couleur respectives de ladite donnée d'image.

3. Imprimante selon la revendication 2, dans laquelle le moyen d'impression sert à imprimer, séparément, lesdites composantes de couleur.

4. Imprimante selon la revendication 2 ou 3, incluant un moyen (48, 52) de traitement de signal destiné à convertir un signal vidéo d'entrée, selon ladite norme de signal vidéo composite, en un signal de RGB (Rouge - Vert - Bleu), dans laquelle le moyen de mémorisation est agencé pour mémoriser ledit signal de RGB.

5. Imprimante selon l'une quelconque des revendications précédentes, incluant un moyen (74) générateur d'adresses d'enregistrement pour adresser le moyen de mémorisation pour y écrire ladite donnée d'image.

6. Imprimante selon l'une quelconque des revendications précédentes, dans laquelle le moyen d'impression comprend une tête (72) d'impression thermique.

7. Imprimante selon l'une quelconque des revendications précédentes, dans laquelle le moyen d'impression comprend un circuit (70) de conversion de gradation intermédiaire.

8. Imprimante selon l'une quelconque des revendications précédentes, dans laquelle le moyen d'impression comprend une mémoire tampon (68) d'impression destinée à mémoriser, avant l'impression, une colonne de donnée d'image, lue dans le moyen de mémorisation.

9. Imprimante selon la revendication 8, dans laquelle la donnée d'image, mémorisée dans la mémoire tampon d'impression, est lue pour commander l'impression pendant ladite période correspondant à la partie image d'un signal selon ladite norme de signal vidéo composite.

10. Imprimante selon l'une quelconque des revendications précédentes, incluant un convertisseur (56) d'analogique en numérique destiné à numériser un signal vidéo d'entrée, dans laquelle le moyen de mémorisation mémorise des signaux vidéo numérisés sortis par le convertisseur d'analogique en numérique.
